# EUROPEAN PATENT APPLICATION

(11) **EP 4 496 244 A1**
(43) Date of publication of application: **22.01.2025**
(21) Application number: 24188754.6
(22) Date of filing: 16.07.2024
(51) Int. Cl.: H04L 1/00

(54) **REPORTING ASSISTANCE**

(30) Priority: 17.07.2023 FI 20235830
(71) Applicant: Nokia Technologies Oy, 02610 Espoo (FI)
(72) Inventor: PEDERSEN, Klaus Ingemann, 9000 Aalborg (DK); AMIRI, Abolfazl, 9220 Aalborg (DK)
(74) Representative: Nokia EPO representatives

(57) **Abstract**

Methods, apparatus and systems for adaptive signal quality and/or transmission error reporting in a communication network are disclosed.

## Description

### FIELD

The following disclosure relates to the field of communication technology, in particular communication networks, in particular wireless communication networks. The disclosure relates to error and/or quality reporting by a user equipment (UE) to a network node. The disclosure relates, inter alia, to an adaptive feedback by the UE regarding a reporting method.

### BACKGROUND

In modern communication technologies, downlink signal quality and transmission errors need to be indicated, in particular repeatedly, from a first network entity (e.g., a UE) to a second network entity (e.g., a network node). Such reporting ensures proper functioning of the downlink communication between UE and network node. For such reporting, respective reporting methods are provided. For transmission error reporting, the reporting method typically corresponds to a variant of a Hybrid Automatic Repeat request (HARQ) that may be either based on transport blocks (TB-based HARQ) or code block groups (CBG-based HARQ). Transmission error reporting may be done using a variant of a channel quality indicator (CQI) and may for instance correspond to a wideband CQI or a narrowband CQI.

### SUMMARY OF SOME EXAMPLE EMBODIMENTS

A UE reports either transmission error or channel quality of both by using a respective reporting method. The respective reporting method is typically set by the network node. For instance, the UE may obtain an indication of a (e.g., prescribed) reporting method from the network node. The reporting method may comprise a variant of CQI (wideband vs narrowband CQI) and/or a variant of HARQ (TB-based HARQ or CBG-based HARQ).

The different reporting methods represent a respective trade-off between an amount of reporting signaling from the UE to the network node and a downlink channel performance. Downlink channel performance may for instance suffer if signal quality is reported as a (e.g., low) wideband CQI causing excessive forward error correction, whereas in narrowband CQI, a sufficiently high signal quality would have been reported. Downlink channel performance may for instance suffer because of an avoidable amount of re-transmitted downlink traffic that may for instance be caused by TB-based HARQ instead of CBG-based HARQ. It has been recognized that different reporting methods are suited for different downlink receptions, in particular a downlink reception as received and/or monitorable by the UE.

It has further been recognized that it can be challenging for the network node to select and configure a reporting method which is best suited for the UE and its current radio environment, for instance for a (e.g., downlink) radio channel between the UE and the network node. A mismatch between selected reporting method and reporting needs of the UE may arise that causes avoidable reporting overhead and/or sub-optimal downlink channel performance (e.g., due to excessive re-transmissions and/or inefficient bandwidth usage).

It is thus, inter alia, an object of the disclosure to enable a selection of a reporting method that achieves a particularly good trade-off between reporting overhead and downlink channel performance.

According to a first example aspect, a method is disclosed, comprising:
- monitor at least one downlink parameter of a downlink reception,
- provide at least one reporting method assistance information to at least one network node based on the at least one downlink parameter, wherein the reporting method assistance information comprises at least one of a channel quality information, CQI, reporting indication or a transmission error reporting indication.

This method may for instance be performed and/or controlled by an apparatus, for instance a server. Alternatively, this method may be performed and/or controlled by more than one apparatus, for instance a server cloud comprising at least two servers. Alternatively, the method may for instance be performed and/or controlled by an electronic device, e.g. a node in a communication system and/or by a user equipment (UE). For instance, the method may be performed and/or controlled by using at least one processor of the electronic device.

According to a further example aspect, a computer program is disclosed, the computer program when executed by a processor causing an apparatus, for instance a server, a network node or a UE, to perform and/or control the actions of the method according to the first example aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-(e.g., only) Memory (ROM) or hard disk of a computer, or be intended for distribution of the program, like an optical disc.

According to a further example aspect, an apparatus is disclosed, configured to perform and/or control or comprising respective means for performing and/or controlling the method according to the first example aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise (e.g., only) the disclosed components, for instance means, processor, memory, or may further comprise one or more additional components.

A user equipment (UE) may for instance correspond to a mobile device such as for example a mobile phone, tablet, smartwatch, a laptop, a Personal Digital Assistant (PDA) device, a wearable, an Internet-of-Things (IOT) device, an IIOT (Industrial IOT) device the vehicle and/or combinations thereof. Such a user equipment may also be referred to as user device.

A network node may correspond to a component of a communication network such as for instance a Base Transceiver Station (BTS), a nodeB, an evolved node B (eNB), a Next Generation NodeB (gNB), a distributed unit (DU), a central unit (CU) and/or combinations thereof.

The method may thus be performed and/or controlled by an apparatus, wherein the apparatus may in particular be a UE. The method may be performed within an existing communication session. The communication session may be established between the apparatus (e.g., UE) and the network node. The method may have the effect to adjust the existing communication session, in particular adjust a reporting method used by the UE within the existing communication session,

The apparatus may monitor at least one downlink parameter of a downlink reception. The Downlink reception may comprise a communication (e.g., a single signal received, a series of signals received), a communication session (e.g., signals received during an established communication session), a carrier (e.g., signals received within a given carrier of a communication network, in particular a communication network to which the apparatus and the network node belong, e.g., a carrier provided by the apparatus and/or a carrier on which a PDSCH is and/or may be scheduled), at least one subband (e.g., within the carrier) and/or a (e.g., scheduled) PDSCH (e.g., at least one subband (e.g., of the channel) on which a PDSCH will be, has been and/or is scheduled). The downlink reception may be provided by a network node.

The downlink parameter may for instance relate to a noise level and/or at least one transmission error within the respective downlink reception. The downlink parameter may be monitored over a predetermined time, for instance at least 10ms, 100ms, 1s, 10s, 100s, 1000s or more and/or at most 10ms, 100ms, 1s, 10s, 100s, 1000s or less. For instance, the downlink parameter may be, additionally or alternatively, be monitored intermittently, e.g. the method may alternate between monitoring and not monitoring (un-monitoring). Un-monitoring phases may be longer in time than monitoring phases. The downlink parameter may be monitored over a (e.g., predefined) number of (e.g., PDSCH transmissions), e.g. over a number of transports blocks (TB), for instance at least 10,100,1000 or 10000 TBs.

The method further comprises providing at least one reporting method assistance information to at least one network node based on the at least one downlink parameter. The network node may for instance be the network node providing a carrier (e.g., the carrier), at least one subband (e.g., the at least one subband) and/or a PDSCH (e.g., the PDSCH, e.g., at least one subband on which the PDSCH is scheduled).

Providing may be done using an uplink reporting radio resource. The may have been indicated by the network, in particular a network node of the communication network, for instance by the network node providing downlink resources. Providing may be done by, e.g., a (physical layer) uplink control information (UCI), a downlink control information (DCI), as a Medium Access Control Control Element (MAC-CE) signaling, System Information (SI) and/or Radio Resource Control (RRC) signaling. It has been recognized that the reporting method assistance information is not subject to very strict timing requirements.

Providing may be triggered by the UE, for instance if the UE detects that a change in a reporting method may be beneficial. Additionally or alternatively, providing may be done periodically, e.g. at a predetermined interval and/or after a predetermined number of (e.g., PDSCH) transmissions, e.g., TBs.

Providing the at least one reporting method assistance information is based on the monitored at least one downlink parameter. Thus, the providing may be conditional on the monitoring. Additionally or alternatively, the reporting method assistance information may comprise varying contents depending on the monitored at least one downlink parameter.

The reporting method assistance information comprises at least one of a channel quality information, CQI, reporting indication or a transmission error reporting indication. The channel quality information, CQI, reporting indication and/or the transmission error reporting indication may enable the obtaining network node to derive at least one of a CQI reporting method, a CQI reporting method characteristic, a transmission error reporting method and/or a transmission error reporting method characteristic. The channel quality information, CQI, reporting indication and/or the transmission error reporting indication may correspond to a derived indication, respectively, which may in particular be derived by the apparatus (e.g., UE) performing the method. Additionally or alternatively, the channel quality information, CQI, reporting indication and/or the transmission error reporting indication may correspond to and/or comprise a (e.g., the) monitored downlink parameter.

By providing the reporting method assistance information comprising at least one of these indications, the UE is enabled to inform the network node of a reporting method. The reporting method assistance information may be structured to configure the network node with and/or indicate the network node to activate and/or prescribe at least one of the indicated CQI reporting method, the indicated CQI reporting method characteristic, the indicated transmission error reporting method and/or the indicated transmission error reporting method characteristic. The intended use of the reporting method assistance information may thus be to inform the network node of a (e.g., changed) reporting method and/or configure the network node for a (e.g., changed) reporting method and/or to propose, e.g. to the network node, a (e.g., changed) reporting method. The provision of reporting method assistance information by the UE to the network node thus enables a UE-centered adjustment of the reporting method. As the UE monitors the downlink reception, the indicated reporting method can be suited to the monitored, i.e., the current, downlink reception.

According to an embodiment of the first example aspect, the method may further comprise
- determine at least one of the at least one reporting method assistance information based on the at least one downlink parameter.

The method may comprise determining the reporting method assistance information. For instance, the apparatus performing the method may be configured to determine the reporting method assistance information. The determining may be based on the at least one monitored downlink parameter. For instance, at least one rule may link at least one value and/or state of at least one monitored downlink parameter to at least one reporting method. The rule may for instance be stored within a memory of the apparatus. The rule may be implemented as a function, a table, an array, a graph and/or combinations thereof. The method may comprise using the monitored downlink parameter and deriving at least one element of and/or the reporting method assistance information from it.

The determining may be done after the monitoring of the at least one downlink parameter and before the providing of the at least one reporting method assistance information.

By determining the reporting method assistance information, a UE performing the method actively determines what reporting method is to be indicated to the network node. In particular, the determining may enable the UE to flexibly derive a suitable reporting method based on the monitored downlink parameter (e.g., only) and/or in combination with further factors. The determining thus further enhances the ability of the UE to influence the reporting method.

According to an embodiment of the first example aspect,
- the at least one downlink parameter of a downlink reception comprises a signal quality of a scheduled PDSCH and a signal quality of a carrier and
- determine is based on the signal quality of the scheduled PDSCH and the signal quality of a carrier, wherein the channel quality information, CQI, reporting indication comprised by the determined reporting method assistance information
   - indicates a narrowband CQI reporting method if the signal quality of the scheduled PDSCH is larger than the signal quality of the carrier by at least a predetermined signal quality difference threshold and
   - indicates a wideband CQI reporting method if the signal quality of the scheduled PDSCH is smaller than or equal to the signal quality of the carrier plus the predetermined signal quality difference threshold
      or
- the at least one downlink parameter of a downlink reception at least one of comprises or is used to determine a number of re-transmitted code blocks, CBs, considering a CBG-based transmission error reporting method and a number of re-transmitted CBs considering a TB-based transmission error reporting method and
- determine is based on the number of re-transmitted CBs considering a CBG-based transmission error reporting method and the number of re-transmitted CBs considering a TB-based transmission error reporting method, wherein the transmission error reporting indication comprised by the determined reporting method assistance information
   - indicates a CBG-based transmission error reporting method if the number of re-transmitted CBs considering a TB-based transmission error reporting method is higher than the number of re-transmitted CBs considering a CBG-based transmission error reporting method by a predefined re-transmission number threshold and
   - indicates a TB-based transmission error reporting method if the number of re-transmitted CBs considering a TB-based transmission error reporting method is lower than or equal to the number of re-transmitted CBs considering a CBG-based transmission error reporting method plus a predefined re-transmission number threshold.

Determining may comprise determining a signal quality, e.g., a channel quality information, CQI, reporting indication and/or determining a transmission error reporting indication. The determined CQI reporting indication and/or transmission error reporting indication may then be comprised by the determined reporting.

Determining may in particular comprise determining a CQI reporting method. CQI reporting enables the network node to be informed about the reception at the UE. The network node may subsequently adjust at least one transmission parameters to ensure (e.g., at least) a minimum signal quality. Different CQI reporting methods may, inter alia, provide for a different respective degree of reporting granularity.

The at least one downlink parameter of a downlink reception may comprise a signal quality of a scheduled Physical Downlink Shared CHannel (PDSCH). The signal quality of a scheduled PDSCH may in particular correspond to the signal quality of at least one subband (e.g., of a channel) on which a PDSCH will be, has been and/or is scheduled. The at least one downlink parameter may further comprise a signal quality of a carrier. The signal quality of a at least one subband (e.g., but not all subband of the carrier, i.e., a subset of subbands, e.g., at most 1, 2, 3, 4, 5, 10 or 20 subbands) may be referred to as narrowband signal quality. The carrier may in particular comprise the PDSCH and/or at least one subband of the scheduled PDSCH. The signal quality of a carrier may be referred to as wideband signal quality.

A signal quality may in particular correspond to a Signal-to-Interference-to-Noise Ratio (SINR), a Signal-to-Noise Ratio (SNR), reception strength and/or combinations thereof. The signal quality may be evaluated by the apparatus (e.g. the UE). The signal quality may be an experienced and/or received signal quality, in particular by the apparatus. The signal quality may be evaluated over a predetermined time, for instance at least and/or at most 10ms, 100ms, 1s, 10s or 100s. Additionally or alternatively, the signal quality may be evaluated over a predetermined number of transmissions, e.g. PDSCH transmissions, e.g., number of received transport blocks.

Determine may be based on (e.g., may comprise comparing) the signal quality of the scheduled PDSCH (may be denoted as PDSCH signal quality) and the signal quality of a carrier (e.g., the carrier on which the PDSCH is scheduled). The signal quality of the carrier may be denoted as wideband signal quality. By considering the PDSCH signal quality and the wideband signal quality (e.g., comparing the two/ computing a difference and/or fraction between them), it can be decided whether a wideband channel quality information (CQI) reporting method or a narrowband CQI reporting method may be advantageous. For instance, a difference between PDSCH signal quality and wideband signal quality may be evaluated as part of the determining. I.e. PDSCH signal quality and wideband signal quality may be compared.

Using a narrowband CQI reporting method, the UE reports signal quality differentiated by subbands (e.g., single subbands or at least one subgroup of subbands or all subbands within a carrier). Narrowband CQI reporting is more precise and allows the network node to evaluate signal quality it provides in a manner differentiated by subbands. For instance, certain subbands may require different signal quality and/or using essentially identical transmission parameters, the received signal quality in these subbands may still differ. A wideband CQI reporting may obscure these nuances. Narrowband CQI reporting has the disadvantage of an increase reporting (e.g., uplink) signaling overhead compared to wideband CQI reporting.

Wideband CQI reporting is thus cheaper in terms of reporting signaling (e.g., 4-5 bits may suffice). However, it is less precise and does not enable any differentiation between subbands. It has been recognized that wideband CQI reporting is advantageous if the subbands (e.g., all) have similar signal quality (e.g., similar among one another or similar to the wideband signal quality) or if at least the subbands of interest (e.g., the or at least a subset or one of the subbands on which the PDSCH is scheduled) have similar signal quality to the wideband signal quality. In these cases, the wideband signal quality already represents the signal quality of the subbands of interest (e.g., the one on which the PDSCH is scheduled) and there is no need to report signal quality in a more precise manner than wideband CQI reporting.

The PDSCH signal quality may correspond to a required signal quality for the PDSCH and/or to a received and/or monitored signal quality of at least one or the subbands on which the PDSCH is scheduled.

The determining may in particular determine the reporting method assistance information to comprise a CQI reporting indication which indicates a wideband CQI reporting method if the signal quality of the scheduled PDSCH is smaller than or equal to the signal quality of the carrier plus a predetermined signal quality difference threshold. In other words, if the difference between PDSCH signal quality minus wideband signal quality is lower than the predetermined signal quality difference threshold, wideband CQI reporting may be and/or is selected.

The predetermined signal quality difference threshold may for instance correspond to a (e.g., fixed) signal quality difference such as for instance 1 dB, 3 dB, 6 dB, 10 dB, 20 dB or more. The predetermined signal quality difference threshold may be stored within the apparatus, may be set by a (e.g., the) network node, e.g., by a (e.g., separate) signaling, e.g. by RRC, MAC, DCI, SI and/or combinations thereof.

When narrowband reporting is used, it may further be decided (e.g., by the UE) what subbands are to be monitored and/or reported and whether subbands are to be grouped and if so, how.

The determining may in particular determine the reporting method assistance information to comprise a CQI reporting indication which indicates a narrowband CQI reporting method if the signal quality of the scheduled PDSCH is larger than the signal quality of the carrier by at least the predetermined signal quality difference threshold.

The determining may additionally or alternatively comprise determining an transmission error reporting method.

One of the purposes fulfilled by an transmission error reporting from the UE to the network node is to enable a re-transmission of data which has not been successfully transmitted from the network node to the UE. For a given TB with at least one faulty CB, a (e.g., complete or partial) re-transmission of the TB may be performed. In order to enable the network node to re-transmit the correct data (i.e., data that has previously experienced a transmission error in a preceding transmission attempt), the UE may provide a feedback about transmission errors as part of the transmission error reporting. Such feedback In particular, all or a subset of the CBs transmitted as part of the TB may be re-transmitted. Different transmission error reporting methods may, inter alia, provide for a different degree of reporting granularity.

The transmission error reporting may for instance be done on a transport block basis, i.e., TB-based. In this case, it is determined, by the UE, for the (e.g., entire) TB whether at least one transmission error has occurred, e.g. during the transmission of the transport block. For instance, a CRC can be performed for the (e.g., entire) TB, comprising (e.g., all) CBs of the respective TB. In case at least one error has occurred, the UE will provide an according error indication (e.g., a non-acknowledgement, NACK) to the network node. The error indication indicates which TB the network needs to re-transmit. TB-based transmission error reporting has the advantage of a low (e.g., uplink) reporting signaling overhead. At the same time, TB-based transmission error reporting can cause excessive re-transmissions in cases where (e.g., only) a part of the transport block was unsuccessfully transmitted but still the entire TB is re-transmitted.

Alternatively, the transmission error reporting may be done in groups of code blocks, so called code block groups (CBGs). CBGs can be interpreted as virtual groups of code blocks (CBs) within the TB. They are typically approximately the same size (number of CBs) respectively, and their number (e.g., 2, 4, 6, 8 or more) may be set as a transmission error reporting method characteristic. The number of CBGs may be predefined and/or indicated, e.g., by the network node, e.g., by RRC, MAC signaling, DCI, SI and/or combinations thereof. This transmission error reporting method may be referred to as CBG-based. In a given TB, multiple CBGs may be defined, wherein the CBGs respectively comprise one or more CBs. In a CBG-based transmission error reporting, the UE may perform a CRC on the code block groups and may (e.g., only) indicate (e.g., as error indication, e.g., NACK) the faulty CBGs to the network node. CBGs with successful transmission and/or positive CRC may be reported using an acknowledgement (ACK), for instance. The network node is then enabled to re-transmit (e.g., only) those CBGs with failed CRC, i.e. CBGs comprising at least one CB received with transmission error. CBG-based transmission error reporting has the advantage that re-transmissions can be reduced compared to TB-based transmission error reporting. As a result, the available downlink radio resources are used at a particularly high efficiency. At the same time, CBG-based transmission error reporting causes increased reporting signaling overhead (e.g., uplink).

For instance, in other words, the TB may be organized into (e.g., multiple) Code Blocks (CBs). The maximum size of a CB may for instance be 8448 bits. The CBs can be grouped (e.g., by the UE) into CBGs. For a received TB, the receiver (e.g., the UE) may provide feedback to indicate which CBGs are in error (e.g., comprise at least one CB received with transmission error), and (e.g., only) the erroneously received CBGs are thereafter retransmitted by the transmitter (e.g., network node). For instance, for transmission of large TBs (e.g., for XR use cases as defined in 3GPP TR 38.838), cases with for instance 8 (or more) CBGs per TB may be supported. A maximum number of CBGs (e.g., maximum of CBGs used by the UE to group the CBs of a TB) per TB may be configurable (e.g., by the network node) as one of 2, 4, 6, or 8 or more for a (e.g., a scheduled, e.g., by the network node) PDSCH.

The UE may, as part of the transmission error reporting, provide an acknowledgement (ACK) in case of a successful transmission or a non-acknowledgement (NACK) in case of a failed transmission (i.e., a transmission error), e.g. per TB, CB and/or CBG.

A choice needs to be made, how many CBG are do be separately evaluated and/or reported to the network node in a CBG-based transmission error reporting. More CBGs further reduce re-transmissions at the same time the signaling overhead (e.g., ACK/NACK messages) increases.

For instance, the UE may utilize a Hybrid Automatic Repeat ReQuest (HARQ) method as a transmission error reporting method. HARQ enables the above described TB-based vs CBG-based transmission error reporting. If a TB-based and/or a CBG-based transmission error reporting method is disclosed, a TB-based and/or a CBG-based HARQ is comprised and/or disclosed as well.

For example, the at least one monitored downlink parameter may comprise and/or may be used to determine a number of (e.g. hypothetically, assuming a certain transport error reporting method) re-transmitted code blocks (CBs), for instance for a (e.g., single) given TB or for multiple TBs. A re-transmission may occur when at least one CB within a given transport block (TB) is faulty, i.e., is received with transmission error. A transmission error may be detected by performing a Cyclic Redundancy Check (CRC). If a checksum obtained does not match a computed checksum based on the received data, the received data (e.g., being part of a TB and/or a CB) is determined to have been received with transmission error.

The determining may comprise determining the CBs received with transmission error, e.g., their position within the corresponding TB and/or their number and/or a share of failed CBs within the TB and/or an error probability (for CBs, for instance). The UE is able to individually perform a CRC on (e.g., every) CB withing a TB. The determining may comprise evaluating the above quantities, in particular the number and/or share of failed CBs, across multiple received TB, for instance at least 2, 3, 5,10,20,100, 500, 1000 or more TBs and/or for instance TBs received during a predefined observation time window, for instance at least 100ms, 500ms, 1s, 5s, 10s, 30s, 60s or more.

The determining may determine a (e.g. hypothetically, assuming a certain transport error reporting method) number of re-transmissions (e.g., number of re-transmitted CBs) for a TB-based transmission error reporting on the one hand and for a CBG-based transmission error reporting on the other hand. The number of re-transmissions may be determined for a (e.g., single) TB or for multiple TBs, for instance at least 2, 3, 5,10,20,100, 500, 1000 or more TBs and/or for instance TBs received during a predefined observation time window, for instance at least 100ms, 500ms, 1s, 5s, 10s, 30s, 60s or more.

For CBG-based reporting, one (e.g., predefined and/or fixed) number of CBG may be considered. Additionally or alternatively, at least two different numbers of CBG, e.g. at least 2, 3, 4, 5, 6, 7, 8,10,12,14, 16, 20, 32, 50, 64, 100, 128, 200, 256 or more mutually different numbers of CBGs may be considered. The numbers of CBGs evaluated may be predefined, e.g., stored in and/or hardcoded into the UE and/or obtained from the network node, e.g., by RRC, MAC signaling, DCI, SI and/or combinations thereof. For instance, the number of CBGs considered by start with 2 and then increase by a factor of 2 until a maximum number of CBGs to consider is reached (i.e., 2, 4, 6, 8, 16, 32, and so on). The numbers of CBG evaluated (e.g., the maximum number of CBGs to evaluate) may depend on the number of CBs received in one TB. The number of CBs in one TB may form an upper limit for the number of CBGs considered. For instance, a maximum number of CBs to consider may be set so that, in case of a uniform distribution of CBs onto CBGs (i.e., the CBGs contain essentially the same number of CBs, respectively), a given CBG does not contain less than 2, 3, 4, 5, 6, 8, 10, 16, 20, 32 of 64 CBs.

Determining may further be based on (e.g., may comprise comparing) the number of (e.g., hypothetically) re-transmitted CBs when considering a CBG-based transmission error reporting method on the one hand and the number of (e.g., hypothetically) re-transmitted CBs considering a TB-based transmission error reporting method on the other hand. Based on these to quantities and/or a comparison, the method may further comprise determining whether a TB-based or a CBG-based reporting method is to be selected. This selection is then reflected by the transmission error reporting indication comprised by the determined reporting method assistance information.

The determining may in particular determine the reporting method assistance information to comprise a transmission error reporting indication which indicates a TB-based transmission error reporting method (e.g., TB-based Hybrid Automatic Repeat reQuest, HARQ), if the number of re-transmitted CBs considering a TB-based transmission error reporting method is lower than or equal to the number of re-transmitted CBs considering a CBG-based transmission error reporting method (e.g., considering a given number of CBG) plus a predefined re-transmission number threshold. In other words, if the difference between number of re-transmitted CBs considering a TB-based transmission error reporting method is minus number of re-transmitted CBs considering a CBG-based transmission error reporting method is lower than the predefined re-transmission number threshold, TB-based transmission error reporting is selected.

The determining may in particular determine the reporting method assistance information to comprise a transmission error reporting indication which indicates a CBG-based transmission error reporting method (e.g., CBG-based Hybrid Automatic Repeat reQuest, HARQ), if the number of re-transmitted CBs considering a TB-based transmission error reporting method is higher than the number of re-transmitted CBs considering a CBG-based transmission error reporting method (e.g., considering a given number of CBG) by a predefined re-transmission number threshold.

The predefined re-transmission number threshold be stored in the apparatus (e.g., UE) and/or may have been obtained from a (e.g., the) network node, e.g., by RRC, MAC signaling, DCI, SI and/or a combination thereof. The predefined re-transmission number threshold may for instance be defined in absolute terms, e.g., by a number of re-transmitted CBs (e.g., by TB), for instance 1, 2, 5, 8, 10, 16, 20, 32, 40, 50, 64, 128 or more. The predefined re-transmission number threshold may for instance be given in relative terms, e.g., 1%, 2%, 5%, 10%, 15%, 20% or more of the CBs within a given and/or multiple TBs (e.g., the TB and/or the TBs which were monitored by the UE and/or an average and/or typical TB).

Additionally or alternatively to the predefined re-transmission number threshold, a gain may be considered when determining the transmission error reporting method (e.g., TB-based or CBG-based). The gain may be expressed in percent, for instance. The gain indicates a desired reduction in re-transmissions (e.g., re-transmitted CBs, e.g., achieved by a CBG-based compared to TB-based transmission error reporting method). The gain may be predefined and may indicate a fraction between (e.g., desired) a number of re-transmissions using CBG-based transmission error reporting compared a number of re-transmissions using to TB-based transmission error reporting. The gain may be indicated by a network node and may be used by the UE to decide between TB-based and CBG-based transmission error reporting as well as determine a number of CBGs to use. When considering a gain (e.g., instead of (e.g., explicitly) considering a predefined re-transmission number threshold), as a result, the evaluation whether the number of re-transmitted CBs considering a TB-based transmission error reporting method is higher than the number of re-transmitted CBs considering a CBG-based transmission error reporting method by a predefined re-transmission number threshold or not is done implicitly. The gain may be stored in the apparatus (e.g., UE) and/or may have been obtained from a (e.g., the) network node, e.g., by RRC, MAC signaling, DCI, SI and/or a combination thereof.

According to an embodiment of the first example aspect, at least one of
- the CQI reporting indication at least one of
   - indicates a preferred CQI reporting method,
   - comprises an indication of at least one preferred CQI reporting method characteristic, or
   - comprises an indication of at least one preferred CQI reporting method characteristic wherein the preferred CQI reporting method characteristic corresponds to at least one of
      - an indication of at least one subband for which CQI is reported, or
      - an indication of a subband size for which CQI is reported,
- the transmission error reporting indication at least one of
   - indicates a preferred transmission error reporting method,
   - comprises an indication of a preferred transmission error reporting method characteristic, or
   - comprises an indication of a preferred transmission error reporting method characteristic, wherein the preferred transmission error reporting method characteristic corresponds to at least one of
      - a number of code block groups, CGBs, per transport block, TB, or
      - an enhanced CQI reporting method.

The CQI reporting indication may indicate a CQI reporting method. The indicated CQI reporting method may correspond to a preferred CQI reporting method that may be determined and/or preferred by the apparatus. The CQI reporting indication may additionally or alternatively indicate and/or comprise an indication of at least one preferred (e.g., preferred by the apparatus and/or determined by the apparatus) CQI reporting method characteristic. A CQI reporting method characteristic may indicate, for a given CQI reporting method such as narrowband or wideband, further adjustment of the method, i.e., further specifics of the reporting.

A (e.g., preferred) CQI reporting method characteristic may in particular comprise an indication of at least one subband (e.g., at least one, a subset of subbands or all subbands in the carrier) for which CQI is reported. Additionally or alternatively, the CQI reporting method characteristic may correspond to an indication of a subband size for which CQI is reported, e.g., a size of at least one subband for which CQI is reported.

The transmission error reporting indication may indicate a transmission error reporting method. The indicated transmission error reporting method may correspond to a preferred transmission error reporting method that may be determined and/or preferred by the apparatus. The transmission error reporting indication may additionally or alternatively indicate and/or comprise an indication of at least one preferred (e.g., preferred by the apparatus and/or determined by the apparatus) transmission error reporting method characteristic. A transmission error reporting method characteristic may indicate, for a given transmission error reporting method such as TB-based or CBG-based, further adjustment of the method, i.e., further specifics of the reporting.

A (e.g., preferred) transmission error reporting method characteristic may correspond to a number of code block groups, CGBs, for instance per transport block, TB. Additionally or alternatively, (e.g., preferred) transmission error reporting method characteristic may correspond to an enhanced CQI reporting method. The enhanced CQI reporting method may for instance guide the network node on a maximum modulation- and coding-scheme (MCS) which it may use while ensuring that (e.g., only) a certain maximum subset of CBGs will need retransmission with a controllable probability. E.g. have an eCQI scheme that guides the gNB to use a MCS index such that at most 4 CBGs (out of 8 CBGs) will require retransmission with probability 10%. Thereby, instead of (e.g., only) offering the possibility to select a MCS corresponding to a certain TB block error probability without, the eCQI allows to control the CBG error probability and therefore how many CBGs of a TB are in error.

According to an embodiment of the first example aspect, the method may further comprise
- obtain at least one reporting method assessment indication,
- obtain at least one reporting method assessment indication, wherein the at least one reporting method assessment indication comprises
   - the signal quality difference threshold,
   - a high signal quality difference threshold,
   - a low signal quality difference threshold,
   - re-transmission number threshold,
   - a gain,
   - a number of CBGs,
   - a maximum number of CBGs, or
   - a minimum transport block size or
- obtain an uplink reporting radio resource indication indicating at least one uplink reporting radio resource, wherein the uplink reporting radio resource is usable by the apparatus to provide the at least one reporting method assistance information.

The network, e.g. a network node, in particular the network node, may instruct the UE how to asses the reporting method and/or what reporting method (and/or reporting method characteristics) the UE should select based on monitoring the downlink reception. To this end, the network node may provide and/or the UE may obtain at least one reporting method assessment indication.

The reporting method assessment indication may obtained by the UE and/or provided by the network node by RRC-signaling, MAC-signaling (e.g. by a MAC-CE), System Information (SI) or physical layer (PHY) layer signaling.

The at least one reporting method assessment indication may in particular comprise the signal quality different threshold used to decide between narrowband or wideband CQI. Additional signal quality thresholds (e.g., high and/or low) may be indicated.

Regarding transport error reporting method selection, a re-transmission number threshold may be obtained that is used to decide between TB-based and CBG-based transmission error reporting method and/or determine at least one transmission error reporting method characteristic such as the number of CBGs. Similarly, a gain may be obtained. The gain may be expressed in percent, for instance. The gain indicates a desired reduction in re-transmissions (e.g., re-transmitted CBs). The gain may be provided as a fraction between (e.g., desired) a number of re-transmissions using CBG-based transmission error reporting compared a number of re-transmissions using to TB-based transmission error reporting.

Additionally or alternatively, a (e.g., maximum) number of CBGs to evaluate by the UE may be indicated and/or a minimum TB size. TB size may be given in a number of CBs. For instance, the UE may not compare CBG-based and TB-based transmission error reporting methods on TBs with a size below the minimum TB size.

The method may further comprise obtaining an uplink reporting radio resource indication. The uplink reporting radio resource indication indicates at least one uplink reporting radio resource. The uplink reporting radio resource indication may be obtained from a (e.g., the) network node. The uplink reporting radio resource is usable by the apparatus to provide the at least one reporting method assistance information, e.g., to the network node and/or report at least one transmission error according to the transmission error reporting method and/or report at least one signal quality according to the CQI reporting method.

For instance, the uplink reporting radio resources may belong to a Physical Uplink Shared CHannel (PUSCH). Additionally or alternatively, the uplink reporting radio resources may belong to a Physical Uplink Control CHannel (PUCCH). In particular, if uplink (UL) data is scheduled for the UE (e.g., by the network node), the uplink reporting radio resources may belong to a PUSCH. In case no uplink (UL) data is scheduled for the UE (e.g., by the network node), the uplink reporting radio resources may belong to a PUCCH. The network may configure the UE to (e.g., also) send at least one of the reporting (i.e., CQI indices and/or HARQ feedback, e.g., ACK/NACK-messages) or the reporting method assistance information via the PUCCH and/or via (e.g., using a grant transmission) the PUSCH. Such configuration may be done using RRC, MAC signaling (e.g., a MAC-CE), DCI, UCI and/or SI.

According to an embodiment of the first example aspect, - the monitored at least one downlink parameter at least comprises a signal quality of the downlink reception.

According to an embodiment of the first example aspect,
- the monitored signal quality comprises at least one of
   - a signal quality of a scheduled PDSCH,
   - a signal quality of a carrier (e.g., for wideband CQI reporting), or
   - a signal quality of at least one (e.g., or a subset or all of the) subband of the carrier (e.g., for narrowband CQI reporting).

According to an embodiment of the first example aspect, the method (e.g., further) comprises
- determine the preferred channel quality information, CQI, reporting method and/or the preferred CQI reporting method (i.e., a method used by the apparatus to indicate CQI) characteristic based on the monitored signal quality.

According to an embodiment of the first example aspect,
- the at least one preferred CQI reporting method corresponds to at least one of
   - a wideband CQI reporting method or
   - a narrowband CQI reporting method, or
- the preferred CQI reporting method characteristic corresponds to at least one of
   - an indication of at least one subband for which CQI is reported (e.g., at least one, a subset of subbands or all subbands in the carrier), or
   - an indication of a subband size for which CQI is reported.

According to an embodiment of the first example aspect,
- determine is at least partly based on the obtained reporting method assessment indication (e.g., the obtained from a network node (e.g., the network node)),
- determine comprises evaluating a subband-to-wideband signal quality difference between a signal quality of the scheduled PDSCH and a signal quality of the carrier or
- determine comprises evaluating a subband-to-wideband signal quality difference between a signal quality of the scheduled PDSCH and a signal quality of the carrier, wherein at least one of
   - a wideband CQI reporting method is determined to be preferred if the difference is larger than a predefined high signal quality difference threshold or
   - a narrowband CQI reporting method is determined to be preferred if the difference is smaller than a predefined low signal quality difference threshold.

The subband-to-wideband signal quality difference may for instance correspond to a difference in signal quality (e.g., SINR, SNR) between a signal quality of a (e.g., the) scheduled PDSCH (e.g., at least one or the subbands on which the PDSCH is scheduled) and a signal quality of a carrier (e.g., the carrier in which the PDSCH is transmitted). The subband-to-wideband signal quality difference may be determined by subtraction or by division (i.e., comprises a subband-to-wideband signal quality fraction/ factor). If the subband-to-wideband signal quality difference is larger than 0 (subtraction) or 1 (division), the signal quality of the PDSCH is higher than the signal quality of the carrier. The subband-to-wideband signal quality difference may be given in dB, for instance.

The predefined high and/or low signal quality difference threshold may be obtained as part of the reporting method assessment indication, e.g. from a (e.g., the) network node. The predefined high signal quality difference threshold may for instance assume one of the example values disclosed with respect to the signal quality difference threshold or a higher value. The predefined low signal quality difference threshold may for instance assume one of the example values disclosed with respect to the signal quality difference threshold or a lower value.

According to an embodiment of the first example aspect,
- the monitored at least one downlink parameter at least comprises at least one transmission error characteristic of the downlink reception.

The transmission error characteristic of the downlink reception may for instance form the basis for determining the transmission error reporting method. For instance, the error characteristic of the downlink reception may be used to determine a number of re-transmissions (e.g., number of r-transmitted CBs) based on different error reporting methods, e.g. TB-based or CBG-based, e.g. while the latter may be evaluated assuming different numbers of CBGs.

According to an embodiment of the first example aspect, the at least one transmission error characteristic comprises at least one of
- at least one a transmission error (e.g. failed CRC check) of at least one of at least one code block, CB, at least one code block group, CBG, or a transport block, TB, received as part of the downlink reception (e.g. in the scheduled PDSCH),
- a number of code blocks (e.g., within a given or multiple TBs) received with transmission error,
- a number of code block groups, CBG, (e.g., in a TB) respectively comprising at least one CB received with transmission error,
- a number of CBGs comprising at least one CB received with transmission error for a given total number of CBGs within a transport block, TB,
- at least two or more numbers of CBGs comprising at least one CB received with transmission error for a two mutually different total numbers of CBGs within a TB,
- an transmission error probability for at least one of CBs, CBGs or TBs (e.g., historical, empirically determined, indicated by network node, preconfigured),
- a distribution of CBs received with transmission error within at least one transport block, TB, or
- a re-transmission volume.

The transmission error characteristic may indicate, in a simple form, at least one or more transmission errors which occurred in a given (e.g., currently obtained) TB. The transmission error may be determined for a CB, a CBG and/or a (e.g., an entire) TB.

The transmission error characteristic may comprise a number of transmission errors, for instance a number of CBs received with transmission error and/or a number of CBGs comprising at least one CB received with transmission error.

The number of CBGs received with error (also called failed or faulty CBGs, e.g., characterized by comprising at least one CB received with error) may be dependent on the number CBGs considered by the UE. Thus, the number of faulty CBGs may be given for a total number of CBGs.

For instance, at least two numbers of CBGs received with error, for two mutually different considered (e.g., total) numbers of CBGs, may be comprised by the transmission error characteristic.

The transmission error characteristic may comprise a transmission error probability, in particular for CBs, CBGs and/or TBs. the transmission error probability may for instance be determined historically (e.g., based on network traffic observations) or empirically (e.g., by the apparatus performing and/or controlling the method, e.g., the UE), for instance based on observations of errors, e.g. by performing CRC on a given number or CBs, CBGs and/or TBs (e.g., at least 100, 1000 or 10000 CBs, CBGs and/or TBs). The transmission error probability may be indicated by the network, e.g., by a network node, e.g., the network node. The transmission error probability may also be preconfigured.

The transmission error characteristic may correspond to a distribution of CBs received with transmission error within at least one transport block, TB. The distribution may correspond to a distribution of fault probability across CBs within a TB. For instance, faulty CBs may be distributed evenly within TBs (e.g., on average). Also, it may be possible, that CBs at the start, end and/or middle of a TB are more likely to be received with transmission error.

Additionally or alternatively, the distribution may correspond to a distribution of number of faulty CBs or share of faulty CB in relation to number of CBs within a TB (e.g., across a number e.g., monitored and/or received of TBs). For instance, transmission errors may typically be clustered in time so that a distribution of a share of faulty CBs may comprise high probabilities and/or occurrences of TBs with zero transmission errors and high probabilities and/or occurrences of TBs with many transmission errors (e.g., share of transmission errors in relation to total number of CBs within TB at least 80%, 90% or more) while intermediate numbers of transmission errors (e.g., 30% - 70%) are rare. In such clustered scenarios, a TB-based transmission error reporting method may be better suited than a CBG-based, for instance. In cases with approximately uniform distribution of shares and/or occurrences of transmission errors, a CBG-based transmission error reporting may be better suited.

The transmission error characteristic may correspond to a re-transmission volume. The re-transmission volume may correspond to a number of retransmitted CBs per TB (e.g., on average or a given, e.g., the current, TB) and/or to an average share of CBs (e.g., across CBs received) for which a retransmission is performed. Such an average share may be determined over multiple CBs and/or TBs, for instance at least 10,100,1000,10000 TBs/CBs or more.

According to an embodiment of the first example aspect, the method (e.g., further) comprises - determine the preferred transmission error reporting method and/or the preferred error reporting method characteristic based on the monitored transmission error characteristic.

According to an embodiment of the first example aspect,
- the preferred transmission error reporting method corresponds to at least one of
   - a transport block based, TB-based, Hybrid Automatic Repeat 19equest, HARQ, or
   - a code block group based, CBG-based, Hybrid Automatic Repeat 19equest, HARQ,, or
- the preferred transmission error reporting method characteristic corresponds to at least one of
   - a number of CGBs per TB or
   - an enhanced CQI reporting method.

According to an embodiment of the first example aspect,
- determine is at least partly based on a reporting method assessment indication (e.g., obtained from the network node), or
- determine comprises at least one of
   - determine a (e.g., an average, an expected and/or a scheduled) number of CB of at least one TB,
   - determine an transmission error probability of CBs (e.g., for at least one TB and/or an expected, average, and/or scheduled transmission error probability),
- determine a share of CBs received with transmission error within one or more TBs,
- determine whether a TB size surpasses a predetermined minimum TB size,
- determine a minimum number of required CBGs resulting in at least a predetermined reduction of re-transmissions,
- determining a minimum number of required CBGs resulting in at least a predetermined reduction of re-transmissions compared to a re-transmission of the entire TB,
- determining a minimum number of required CBGs resulting in at least a predetermined reduction of re-transmissions for a given transmission error probability of CBs.

The reporting method assessment indication may for instance comprise a minimum TB size and/or a (e.g., maximum) number of CBGs to consider.

Determining a transport error reporting method may for instance comprise determining a number of CBs of at least one TB, a transmission error probability of CBs, a share of faulty CBs within one (e.g., a current) or more (e.g., the last at least 10,100,1000 or 10000) TBs.

Determining a transport error reporting method may for instance comprise determining whether a TB size (i.e., number of CBs with the TB) surpasses a predetermined minimum TB size (e.g., indicated by the obtained reporting method assessment indication). For instance, (e.g., only) TBs comprising a minimum number of CBs or more may be considered when determining a transmission error reporting method.

Determining a transport error reporting method may comprise determining a transport error reporting characteristic, such as for instance a number of CBGs. In particular, a minimum number of required CBGs may be determined in order to achieve a predetermined reduction of re-transmissions (e.g., hypothetical re-transmissions, e.g., based on a hypothetical transmission error reporting method). Such a reduction in re-transmissions may be referred to as gain, as disclosed above. A reduction in retransmissions may for instance be expressed as a difference, fraction and/or factor between a number of re-transmissions according to a given first transmission error reporting method and a number of re-transmissions according to an alternative second transmission error reporting method. For instance, the first transmission error reporting method may correspond to a CBG-based transmission error reporting method using a given number of CBGs and/or the second transmission error reporting method may correspond to a TB-based transmission error reporting method. The two transmission error reporting methods may be evaluated on the same data and/or downlink reception, i.e., the (e.g., only) aspect varying (and therefore causing a different number or re-transmissions) may be the transmission error reporting method.

A re-transmission may in particular refer to a re-transmitted CB. A number of re-transmissions corresponds to a number of re-transmitted CBs.

For instance, the difference, fraction and/or factor between re-transmissions may be referred to as a gain, for instance a gain efficiency in downlink radio resource usage. If, for instance, a number of re-transmissions may be reduced by a factor of 2 (i.e., from X % re-transmitted CBs/ total number of (e.g., initially) transmitted CBs to X/2% re-transmitted CBs/total number of (e.g., initially) transmitted CBs), this may be described as a gain of 50%. 50% of the resources used for re-transmissions are then freed for (e.g., initial) transmissions of CBs.

A determined minimum number CBGs for a given reduction in re-transmission and/or a given gain may be determined based on iteratively increasing the number of CBGs and determining the number or (e.g., hypothetical) re-transmissions, for instance of a single TB or multiple TBs, for instance at least 10, 100, 1000, 10000 or more (e.g., recorded and/or historical) TBs.

Additionally or alternatively, the determined minimum number CBGs for a given reduction in re-transmission and/or a given gain may be determined based on a transmission error probability. The transmission error probability may for instance be determined (e.g., by the UE), monitored (e.g., by the UE), predefined and/or obtained (e.g., from the network, e.g., from a network node, e.g., the network node).

According to an embodiment of the first example aspect, the method (e.g., further) comprises
- obtain a prescribed reporting indication (e.g., from a (e.g. the) network node, e.g., by RRC, MAC signaling, DCI, SI and/or combinations thereof), wherein the reporting indication at least one of indicates or controls, configures or indicates to activate at least one of
   - a prescribed CQI reporting method,
   - a prescribed CQI reporting method characteristic,
   - a prescribed transmission error reporting method, or
   - a prescribed transmission error reporting method characteristic.

The network node may indicate a prescribed reporting method for signal quality and/or transmission error reporting and/or respective characteristics. The UE may be configured to use the prescribed reporting method and/or reporting characteristic.

According to an embodiment of the first example aspect,
- the prescribed CQI reporting method corresponds to the preferred CQI reporting method,
- the prescribed CQI reporting method characteristic corresponds to the preferred CQI reporting method characteristic,
- the prescribed transmission error reporting method corresponds to the preferred transmission error reporting method, or
- the prescribed transmission error reporting method characteristic corresponds to the preferred transmission error reporting method characteristic.

The prescribed reporting method and/or reporting method characteristic may correspond to (e.g., may be identical to) the respective preferred reporting method and/or reporting method characteristic (e.g., previously sent as part of the reporting method assistance information). In this case, the network may have "allowed" the preferred respective reporting method (characteristic) as indicated in the reporting method assistance information.

According to an embodiment of the first example aspect, the method (e.g., further) comprises
- activate at least one of the preferred or the prescribed CQI reporting method,
- activate at least one of the preferred or the prescribed CQI reporting method characteristic,
- activate at least one of the preferred or the prescribed transmission error reporting method, or
- activate at least one of the preferred or the prescribed error reporting method characteristic.

According to an embodiment of the first example aspect,
- activating is done in response to obtaining the prescribed reporting indication or
- activating is done autonomously.

The method may comprise activating a reporting method and/or a reporting method characteristic. Activating may refer to utilizing the activated reporting method and/or a reporting method for reporting of e.g., signal quality and/or transmission errors. The preferred and/or the prescribed reporting method and/or a reporting method may be activated, e.g., by the apparatus controlling and/or performing the method, e.g., by a UE.

For instance, the method may comprise obtaining a prescribed reporting indication and may further comprise, in response to obtaining the prescribed reporting indication, to activate a reporting method and/or a reporting method characteristic, in particular the prescribed reporting method and/or reporting method characteristic as indicated in the prescribed reporting indication. The prescribed reporting method and/or a reporting method characteristic may correspond to the preferred reporting method and/or a reporting method characteristic.

Activating a reporting method and/or a reporting method characteristic may additionally or alternatively be done autonomously (e.g., by the UE). In particular, the method may comprise activating the reporting method and/or the reporting method characteristic without obtaining according signaling and/or permission from a network node and/or independently from obtaining a prescribed reporting indication.

According to a second example aspect, a method is proposed, the method comprising
- provide a downlink radio resource to at least one user equipment, UE, (e.g., for a scheduled PDSCH),
- provide at least one uplink reporting radio resource to the UE, and
- obtain at least one reporting method assistance information from the UE (e.g., the one to which the at least one uplink reporting radio resource is provided) on at least one of the at least one uplink reporting radio resource, wherein the reporting method assistance information comprises at least one of a channel quality information, CQI, reporting indication or a transmission error reporting indication.

This method may for instance be performed and/or controlled by an apparatus, for instance a server. Alternatively, this method may be performed and/or controlled by more than one apparatus, for instance a server cloud comprising at least two servers. Alternatively, the method may for instance be performed and/or controlled by an electronic device, e.g. a network node in a communication system and/or by a user equipment (UE). For instance, the method may be performed and/or controlled by using at least one processor of the electronic device.

According to a further example aspect, a computer program is disclosed, the computer program when executed by a processor causing an apparatus, for instance a server, a network node or a UE, to perform and/or control the actions of the method according to the first example aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-(e.g., only) Memory (ROM) or hard disk of a computer, or be intended for distribution of the program, like an optical disc.

According to a further example aspect, an apparatus is disclosed, configured to perform and/or control or comprising respective means for performing and/or controlling the method according to the first example aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise (e.g., only) the disclosed components, for instance means, processor, memory, or may further comprise one or more additional components.

The method may be performed by an apparatus, in particular a network node within a communication network. The network node may provide a UE with downlink radio resources, for instance for a scheduled PDSCH. There may thus exist an active communication session between the UE and the network node. The method may be performed and/or controlled during the active communication session.

The method comprises providing at least one uplink reporting radio resource to the UE. At least one of the uplink reporting radio resource may be used by the UE to inform network node of a (e.g., preferred) reporting method and/or reporting method characteristic.

At least one of the uplink reporting radio resource may be used for transmission error reporting and/or signal quality reporting by the UE to the network node. To this end, the network node may allocate uplink reporting radio resource depending on a utilized reporting method and/or reporting method characteristic. In certain embodiments, uplink reporting radio resource may be pre-allocated for a maximum number of allowed reported CBGs and/or subbands in order to allow the UE to autonomously select a reporting method and/or reporting method characteristic without requiring additional uplink resources to be allocated.

The method further comprises obtaining at least one reporting method assistance information, for instance from the UE to which the at least one uplink reporting radio resource has been provided. The at least one uplink reporting radio resource may for instance be structured to configure the network node performing and/or controlling the method according to the second example aspect to enable the UE to utilize a reporting method and/or reporting method characteristic as indicated by the UE in the reporting method assistance information (and/or by the provided reporting method and/or reporting method characteristic).

According to an embodiment of the second example aspect,
- the CQI reporting indication at least one of
- indicates a preferred CQI reporting method,
- comprises an indication of at least one preferred CQI reporting method characteristic, or
- comprises an indication of at least one preferred CQI reporting method characteristic wherein the preferred CQI reporting method characteristic corresponds to at least one of
   - an indication of at least one subband for which CQI is reported, or
   - an indication of a subband size for which CQI is reported,
- the transmission error reporting indication at least one of
   - indicates a preferred transmission error reporting method,
   - comprises an indication of a preferred transmission error reporting method characteristic, or
   - comprises an indication of a preferred transmission error reporting method characteristic, wherein the preferred transmission error reporting method characteristic corresponds to at least one of
      - a number of code block groups, CGBs, per transport block, TB, or
      - an enhanced CQI reporting method.

According to an embodiment of the second example aspect, the method (e.g., further) comprises
- at least one reporting method assessment indication,
- at least one reporting method assessment indication, wherein the at least one reporting method assessment indication comprises
   - a signal quality difference threshold,
   - a high signal quality difference threshold,
   - a low signal quality difference threshold,
   - a number ofCBGs,
   - a maximum number of CBGs, or
   - a minimum transport block size or
- a prescribed reporting indication,
   - a prescribed reporting indication, wherein the reporting indication at least one of indicates or controls, configures or indicates to activate at least one of
   - a prescribed CQI reporting method,
   - a prescribed CQI reporting method characteristic,
   - a prescribed transmission error reporting method, or
   - a prescribed transmission error reporting method characteristic.

According to an embodiment of the second example aspect,
- the prescribed CQI reporting method corresponds to the preferred CQI reporting method,
- the prescribed CQI reporting method characteristic corresponds to the preferred CQI reporting method characteristic,
- the prescribed transmission error reporting method corresponds to the preferred transmission error reporting method, or
- the prescribed transmission error reporting method characteristic corresponds to the preferred transmission error reporting method characteristic.

According to an embodiment of the second example aspect, the method (e.g., further) comprises
- allocate uplink reporting radio resources,
- allocate uplink reporting radio resources in response to obtaining the at least one reporting method assistance information, or
- allocate uplink reporting radio resources independently from obtaining reporting method assistance information.

According to a third example aspect, a system is proposed, wherein the system comprises a first apparatus and a second apparatus, wherein
- the first apparatus comprises at least one processor; and at least one memory storing instructions that, when executed by the at least one processor, cause the first apparatus at least to:
   - monitor at least one downlink parameter of a downlink reception,
   - provide at least one reporting method assistance information to at least one apparatus comprising the second apparatus based on the at least one downlink parameter, wherein the reporting method assistance information comprises at least one of a channel quality information, CQI, reporting indication or a transmission error reporting indication and
- the second apparatus comprises at least one processor; and at least one memory storing instructions that, when executed by the at least one processor, cause the second apparatus at least to:
   - provide a downlink radio resource to the first apparatus,
   - provide at least one uplink reporting radio resource to the first apparatus, and
   - obtain the at least one reporting method assistance information from the first apparatus on at least one of the at least one uplink reporting radio resource.

For instance, the first apparatus may be configured to provide the at least one reporting method assistance information using at least one of the at least one using a uplink reporting radio resource provided by the second apparatus. The first apparatus (e.g., a UE) performs the method according to the first example aspect and the second apparatus (e.g., a network node) performs the method according to the second example aspect.

### BRIEF DESCRIPTION OF THE DRAWINGS

In the figures show:
- Fig. 1: an example embodiment of signal noise in a channel according to the first, second and third example aspect;
- Fig. 2: an example embodiment of a transport block including faulty code blocks according to the first, second and third example aspect;
- Fig. 3a,b: example embodiments distributions of transmission errors according to the first, second and third example aspect;
- Fig. 4: example embodiment of the effect of increasing code block number according to the first, second and third example aspect;
- Fig. 5: a flow chart of a method according to an embodiment according to the first example aspect;
- Fig. 6: a flow chart of a method according to an embodiment according to the second example aspect;
- Fig. 7: a block diagram illustrating an embodiment according to the first example aspect;
- Fig. 8: a block diagram illustrating an embodiment according to the second example aspect;
- Fig. 9: examples of storage media.

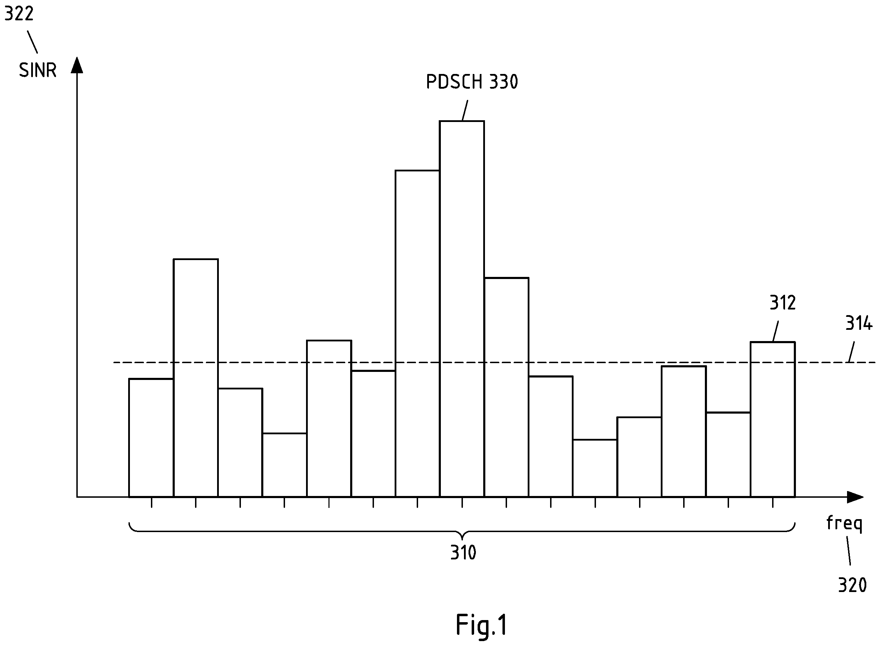

Fig. 1 demonstrates an example result of monitoring signal quality. SINR 322 in a carrier 310 within a frequency range 320 is monitored. A wideband SINR 314 gives an indication of the overall (e.g., average) signal noise across all subbands 312 within the carrier 310. Individual signal qualities of the subbands 312 are also monitored. In the shown example, the SINR 322 of a subband 312 in which the PDSCH 330 is scheduled is higher than the average (wideband) SINR 314. This may indicate that a narrowband signal quality reporting method may be advantageous. In case of a more uniform distribution of SINR 322 across subbands within the carrier 310, a wideband signal quality reporting method may be the better choice.

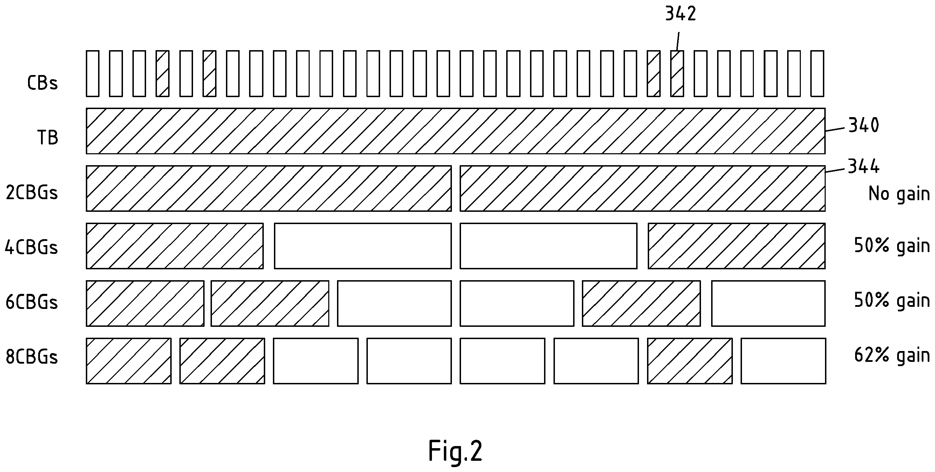

Fig. 2 shows the effect of selecting different numbers of CBGs on the amount of re-transmissions. In the example, a transport block 340 contains a number of CBs 342 of which some (shown in darker shade) are faulty, i.e. received with transmission error. In case of a TB-based transmission error reporting, the entirety of CBs 342 contained in the TB 340 will be re-transmitted, containing many CBs 342 that were received without transmission error. When switching to CBG-based transmission error reporting, at least some re-transmissions may be avoided. An increasing number of CBGs 344 leads to a lower number or re-transmissions. At 2 CBGs 344, as at least one faulty CB 342 is contained by both CBGs 342, still all CBs 342 are re-transmitted. At 4 CBGs 344, (e.g., only) half of the CBs 342 (and half of the CBGs 344) need to be re-transmitted. In 3 of the 6 CBGs 344 there are no faulty CBs 342. A further increase to 6 and 8 CBGs 344 does not reduce the re-transmission volume by much. A gain is shown that represents the reduction in re-transmission achieved by a CBG-based transmission error reporting at a given number of CBGs 344 compared to a TB-based transmission error reporting. The gain may be a requirement set by the network node.

The UE may iteratively increase the number of CBs, e.g. for one TB or for multiple TBs until an (e.g., average across considered TBs) gain (i.e., reduction of re-transmission, e.g., compared to TB-based transmission error reporting) is achieved.

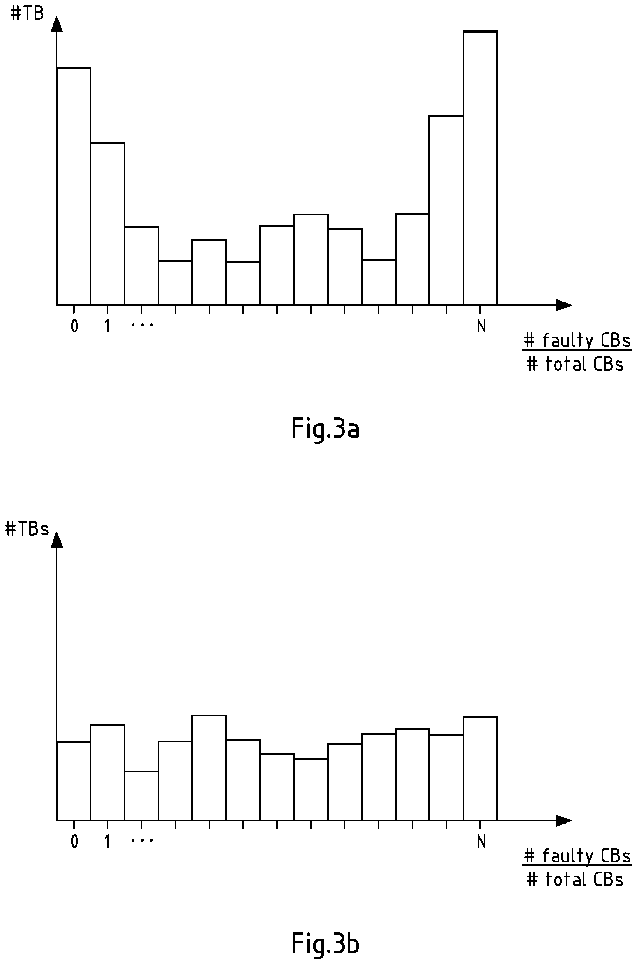

Fig. 3a and b show different distributions of number (e.g., occurrences) of TBs (noted #TB) over a share of faulty CBs (# faulty CBs/ # total CBs). For instance, such distributions may be obtained by monitoring a plurality of TBs and/or may be known for given radio environments and/or predefined.

Fig. 3a shows an example wherein low shares of faulty CBs and high shares of faulty CBs are more frequent than intermediate shares of faulty CBs. This may be the case when transmission errors are typically clustered in time and either most of the TB is received without transmission error or most of the TB is received with transmission error. In such clustered scenarios, a TB-based transmission error reporting method may be best suited as (e.g., only) few TBs are received in which (e.g., only) one or a few CBs are faulty. Either there is not a single transmission error, i.e., the CRC of the TB succeeds and no re-transmission is required or there are many transmission errors and a re-transmission of the entire TB does not cause a re-transmission of (e.g., unnecessarily) many CBs originally obtained without error.

Fig. 3b shows a different distribution which is almost uniform. Such a distribution may arise if single faulty CBs are scattered through the received TBs and/or temporal clustering of transmission faults is limited to short time scales of the order of magnitude of one or a few CBs. In such a distribution of shares of faulty CBs across TBs, a CBG-based transmission error reporting method may be better suited. TBs with (e.g., only) a few faulty CBs are more likely to occur as in the scenario of Fig. 3a. In these cases, switching from TB-based to CBG-based transmission error reporting may reduce the number of re-transmission particularly strongly.

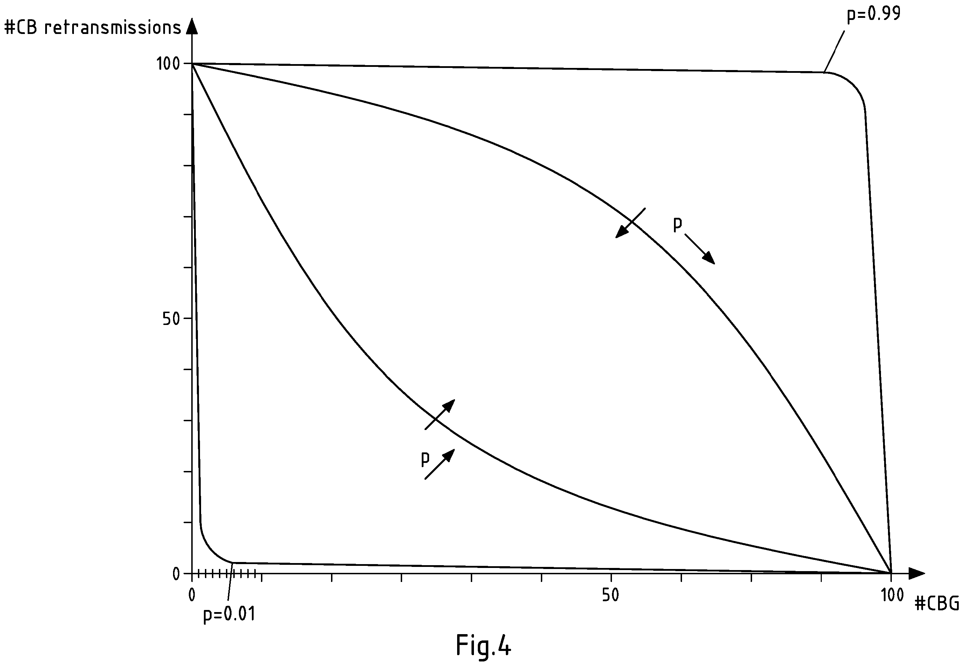

Fig. 4 illustrates the effect of increasing the number of CBGs on the number of re-transmitted CBs for a single TB assuming a uniform distribution of CBGs within the TB. The ordinate corresponds to the number of retransmitted CBs (noted #CB retransmissions), the abscissa corresponds to the number of code block groups (noted #CBG). Here, we assume 100 CBs within the TB and at least one transmission error. The curves show the different numbers of re-transmission depending on the number of CBGs and at a given transmission error probability. As can be seen, for very low error probabilities p (i.e., low number of faulty CBs), a CBG-based transmission error reporting method may in some cases be effective in reducing number of re-transmitted CBs. At higher error probabilities p (i.e., TBs with almost (e.g., only) faulty CBs), the gain from CBG-based transmission error reporting may be reduced.

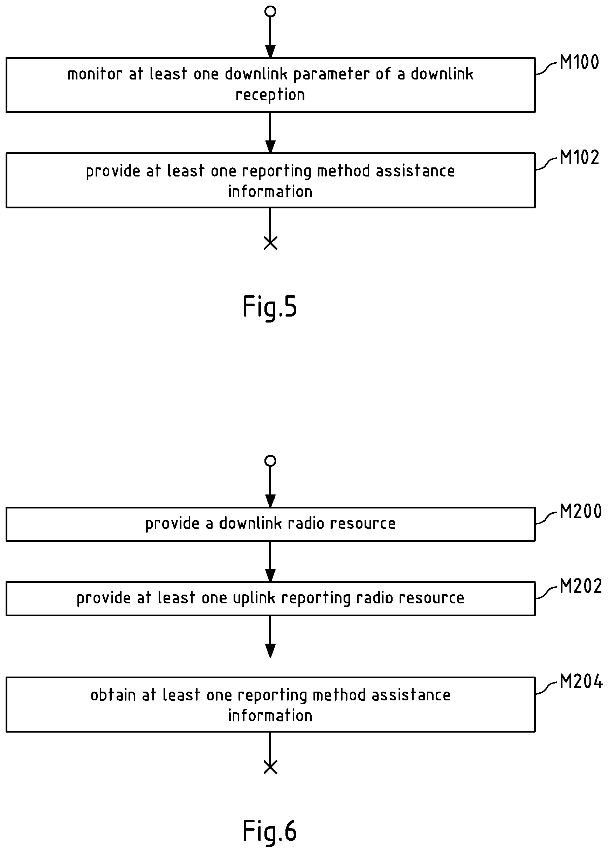

Fig. 5 shows a flow chart of the actions according to the method according to the first example aspect that may be performed by a UE. In action M100, the UE monitors at least one downlink parameter of a downlink reception. The downlink reception may comprise a scheduled PDSCH and may originate from a network node. The downlink parameter may for instance correspond to a signal quality of a carrier and/or a subband and/or to a transmission error characteristic. In action M 102, reporting method assistance information is provided, e.g., to the network node providing the scheduled PDSCH. The UE may thereby indicate a (e.g., preferred) signal quality reporting method and/or signal quality reporting method characteristic and/or transmission error reporting method and/or transmission error reporting method characteristic. The (e.g., preferred) signal quality reporting method may for instance correspond to a CQI reporting method such as for instance either narrowband or wideband CQI reporting, for instance for a predefined set of subbands. The (e.g., preferred) transmission error reporting method may for instance correspond to a HARQ reporting method such as for instance a TB-based or a CBG-based HARQ reporting method, for instance for a predefined number of CBGs.

Fig. 6 shows a flow chart of the actions according to the method according to the second example aspect that may be performed by a network node. The network node may provide a downlink radio resource in action M200, e.g. to a UE, e.g. to a UE performing the actions according to the second example aspect. The downlink radio resource may for instance comprise at least one subband used to schedule a PDSCH. In action M202, at least one uplink reporting radio resource is provided, e.g. to the UE. The method further comprises obtaining at least one reporting method assistance information in action M204, wherein the reporting method assistance information may be obtained through at least one of the at least one uplink reporting radio resource.

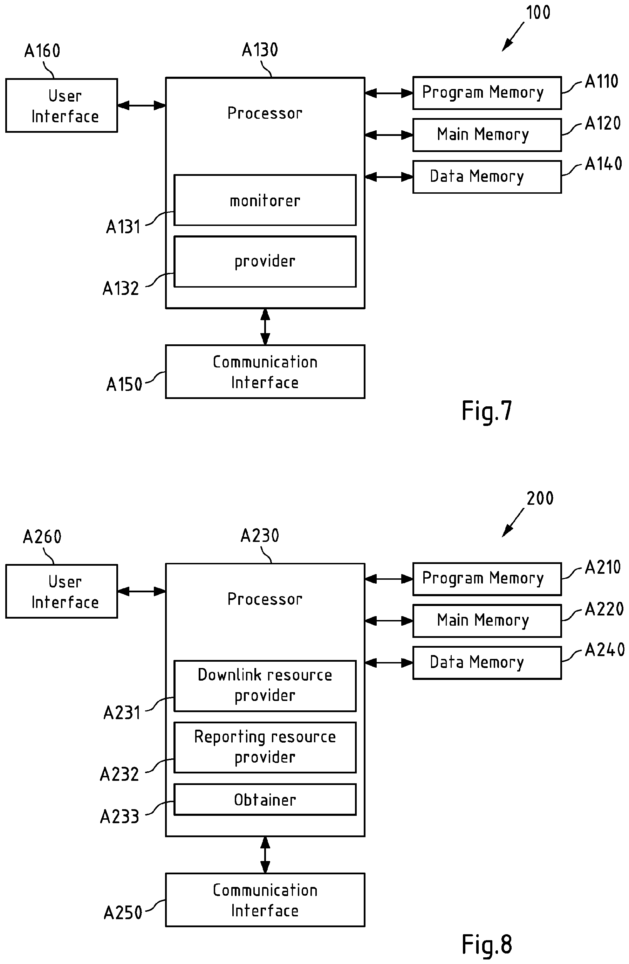

Fig. 7 shows an example block diagram of a UE 100. The UE may perform a method according to the first example aspect. The UE comprises a user interface A160, a program memory A110, a main memory A120, and a data memory A140. Further, it comprises a processor A130. The apparatus 100 may further comprise functional units A131 and A132 which respectively correspond to the actions as shown in the flowchart of figure 5. The provider A132 may for instance be connected to and/or control the communication interface A150 in order to provide the at least one reporting method assistance information.

Fig. 8 shows an example block diagram of a network node 200. The network node may perform a method according to the second example aspect. The network node may comprise a user interface A260, a program memory A210, a main memory A220, and a data memory A240. Further, it comprises a processor A230. The network node 200 may further comprise functional units A231 to A233 which respectively correspond to the actions as shown in the flowchart of figure 6. The obtainer A233 may for instance work together with the communication interface A250.

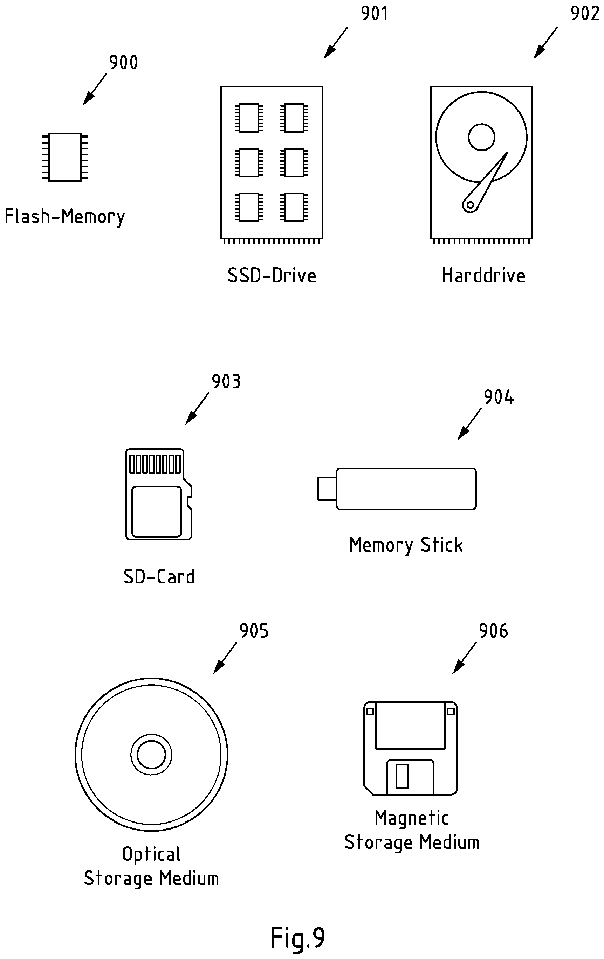

Fig. 9 is a schematic illustration of examples of tangible and non-transitory computer-readable storage media according to the present invention that may for instance be used to implement program and/or main memory A110, A120, A140, A210, A220, A240 of the apparatus 100 and/or 200 of Fig. 7 and 8. Fig. 9 shows a flash memory 900, which may for instance be soldered or bonded to a printed circuit board, a solid-state drive 901 comprising a plurality of memory chips (e.g. Flash memory chips), a magnetic hard drive 902, a Secure Digital (SD) card 903, a Universal Serial Bus (USB) memory stick 904, an optical storage medium 905 (such as for instance a CD-ROM or DVD) and a magnetic storage medium 906.

Some embodiments comprise:
Embodiment 1: A method, e.g., according to the first example aspect, comprising:
   - monitor at least one downlink parameter of a downlink reception,
   - provide at least one reporting method assistance information to at least one network node, e.g., according to the second example aspect, based on the at least one downlink parameter, wherein the reporting method assistance information comprises at least one of a channel quality information, CQI, reporting indication or a transmission error reporting indication.
Embodiment 2: The method according to embodiment 1, further comprising:
   - determine the at least one of the at least one reporting method assistance information based on the at least one downlink parameter.
Embodiment 3: The method according to embodiment 2, wherein at least one of
   - the at least one downlink parameter of a downlink reception comprises a signal quality of a scheduled PDSCH and a signal quality of a carrier and
   - determine is based on the signal quality of the scheduled PDSCH and the signal quality of a carrier, wherein the channel quality information, CQI, reporting indication comprised by the determined reporting method assistance information
      - indicates a narrowband CQI reporting method if the signal quality of the scheduled PDSCH is larger than the signal quality of the carrier by at least a predetermined signal quality difference threshold and
      - indicates a wideband CQI reporting method if the signal quality of the scheduled PDSCH is smaller than or equal to the signal quality of the carrier plus the predetermined signal quality difference threshold or
   - the at least one downlink parameter of a downlink reception at least one of comprises or is used to determine a number of re-transmitted code blocks, CBs, considering a CBG-based transmission error reporting method and a number of re-transmitted CBs considering a TB-based transmission error reporting method and
   - determine is based on the number of re-transmitted CBs considering a CBG-based transmission error reporting method and the number of re-transmitted CBs considering a TB-based transmission error reporting method, wherein the transmission error reporting indication comprised by the determined reporting method assistance information
      - indicates a CBG-based transmission error reporting method if the number of re-transmitted CBs considering a TB-based transmission error reporting method is higher than the number of re-transmitted CBs considering a CBG-based transmission error reporting method by a predefined re-transmission number threshold and
      - indicates a TB-based transmission error reporting method if the number of re-transmitted CBs considering a TB-based transmission error reporting method is lower than or equal to the number of re-transmitted CBs considering a CBG-based transmission error reporting method plus a predefined re-transmission number threshold.
Embodiment 4: The method according to any of embodiments 1 to 3, wherein at least one of
   - the CQI reporting indication at least one of
      - indicates a preferred CQI reporting method,
      - comprises an indication of at least one preferred CQI reporting method characteristic, or
      - comprises an indication of at least one preferred CQI reporting method characteristic wherein the preferred CQI reporting method characteristic corresponds to at least one of
         - an indication of at least one subband for which CQI is reported, or
         - an indication of a subband size for which CQI is reported,
   - the transmission error reporting indication at least one of
      - indicates a preferred transmission error reporting method,
      - comprises an indication of a preferred transmission error reporting method characteristic, or
      - comprises an indication of a preferred transmission error reporting method characteristic, wherein the preferred transmission error reporting method characteristic corresponds to at least one of
         - a number of code block groups, CGBs, per transport block, TB, or
         - an enhanced CQI reporting method.
Embodiment 5: The method according to any of embodiments 1 to 4, further comprising at least one of
   - obtain at least one reporting method assessment indication,
   - obtain at least one reporting method assessment indication, wherein the at least one reporting method assessment indication comprises
      - a signal quality difference threshold,
      - a high signal quality difference threshold,
      - a low signal quality difference threshold,
      - re-transmission number threshold,
      - a gain,
      - a number ofCBGs,
      - a maximum number of CBGs, or- a minimum transport block size or
   - obtain an uplink reporting radio resource indication indicating at least one uplink reporting radio resource, wherein the uplink reporting radio resource is usable by the apparatus to provide the at least one reporting method assistance information.
Embodiment 6: The method according to any of embodiments 1 to 5, wherein
   - the monitored at least one downlink parameter at least comprises a signal quality of the downlink reception.
Embodiment 7: The method according to embodiment 6, wherein
   - the monitored signal quality comprises at least one of
      - a signal quality of a scheduled PDSCH,
      - a signal quality of a carrier, or
      - a signal quality of at least one subband of the carrier.
Embodiment 8: The method according to embodiment 5 or 7, further comprising:
   - determine the preferred channel quality information, CQI, reporting method and/or the preferred CQI reporting method characteristic based on the monitored signal quality.
Embodiment 9: The method according to embodiment 8, wherein at least one of
   - the at least one preferred CQI reporting method corresponds to at least one of
      - a wideband CQI reporting method or
      - a narrowband CQI reporting method, or
   - the preferred CQI reporting method characteristic corresponds to at least one of
      - an indication of at least one subband for which CQI is reported, or
      - an indication of a subband size for which CQI is reported.
Embodiment 10: The method according to embodiment 8 or 9, wherein at least one of
   - determine is at least partly based on the obtained reporting method assessment indication,
   - determine comprises evaluating a subband-to-wideband signal quality difference between a signal quality of the scheduled PDSCH and a signal quality of the carrier or
   - determine comprises evaluating a subband-to-wideband signal quality difference between a signal quality of the scheduled PDSCH and a signal quality of the carrier, wherein at least one of
      - a wideband CQI reporting method is determined to be preferred if the difference is larger than a predefined high signal quality difference threshold or
      - a narrowband CQI reporting method is determined to be preferred if the difference is smaller than a predefined low signal quality difference threshold.
Embodiment 11: The method according to any of embodiment 1 to 10, wherein
   - the monitored at least one downlink parameter at least comprises at least one transmission error characteristic of the downlink reception.
Embodiment 12: The method according to embodiment 11, wherein the at least one transmission error characteristic comprises at least one of
   - at least one a transmission error of at least one of at least one code block, CB, at least one code block group, CBG, or a transport block, TB, received as part of the downlink reception,
   - a number of code blocks received with transmission error,
   - a number of code block groups, CBG, respectively comprising at least one CB received with transmission error,
   - a number of CBGs comprising at least one CB received with transmission error for a given total number of CBGs within a transport block, TB,
   - at least two or more numbers of CBGs comprising at least one CB received with transmission error for a two mutually different total numbers of CBGs within a TB,
   - an transmission error probability for at least one of CBs, CBGs or TBs,
   - a distribution of CBs received with transmission error within at least one transport block, TB, or
   - a re-transmission volume.
Embodiment 13: The method according to embodiment 11 or 12, further comprising:
   - determine the preferred transmission error reporting method and/or the preferred error reporting method characteristic based on the monitored transmission error characteristic.
Embodiment 14: The method according to embodiment 13, wherein at least one of
   - the preferred transmission error reporting method corresponds to at least one of
      - a transport block based, TB-based, Hybrid Automatic Repeat reQuest, HARQ, or
      - a code block group based, CBG-based, Hybrid Automatic Repeat reQuest, HARQ,, or
   - the preferred transmission error reporting method characteristic corresponds to at least one of
      - a number of CGBs per TB or
      - an enhanced CQI reporting method.
Embodiment 15: The method according to embodiment 13 or 14, wherein at least one of
   - determine is at least partly based on a reporting method assessment indication, or
   - determine comprises at least one of
      - determine a number of CB of at least one TB,
      - determine an transmission error probability of CBs,
      - determine a share of CBs received with transmission error within one or more TBs,
      - determine whether a TB size surpasses a predetermined minimum TB size,
      - determine a minimum number of required CBGs resulting in at least a predetermined reduction of re-transmissions,
      - determining a minimum number of required CBGs resulting in at least a predetermined reduction of re-transmissions compared to a re-transmission of the entire TB,
      - determining a minimum number of required CBGs resulting in at least a predetermined reduction of re-transmissions for a given transmission error probability of CBs.
Embodiment 16: The method according to any of embodiments 1 to 15, further comprising:
   - obtain a prescribed reporting indication, wherein the reporting indication at least one of indicates or controls, configures or indicates to activate at least one of
      - a prescribed CQI reporting method,
      - a prescribed CQI reporting method characteristic,
      - a prescribed transmission error reporting method, or
      - a prescribed transmission error reporting method characteristic.
Embodiment 17: The method according to embodiment 16, wherein at least one of
   - the prescribed CQI reporting method corresponds to the preferred CQI reporting method,
   - the prescribed CQI reporting method characteristic corresponds to the preferred CQI reporting method characteristic,
   - the prescribed transmission error reporting method corresponds to the preferred transmission error reporting method, or
   - the prescribed transmission error reporting method characteristic corresponds to the preferred transmission error reporting method characteristic.
Embodiment 18: The method according to any of embodiments 8 to 17 further comprising at least one of
   - activate at least one of the preferred or the prescribed CQI reporting method,
   - activate at least one of the preferred or the prescribed CQI reporting method characteristic,
   - activate at least one of the preferred or the prescribed transmission error reporting method, or
   - activate at least one of the preferred or the prescribed error reporting method characteristic.
Embodiment 19: The method according to embodiment 18, wherein at least one of
   - activating is done in response to obtaining the prescribed reporting indication or
   - activating is done autonomously.
Embodiment 20: An method, e.g., according to the second example aspect, comprising:
   - provide a downlink radio resource to a user equipment, UE,
   - provide at least one uplink reporting radio resource to the UE, and
   - obtain at least one reporting method assistance information from the UE on at least one of the at least one uplink reporting radio resource, wherein the reporting method assistance information comprises at least one of a channel quality information, CQI, reporting indication or a transmission error reporting indication.
Embodiment 21: The method according to embodiment 20, wherein at least one of
   - the CQI reporting indication at least one of
      - indicates a preferred CQI reporting method,
      - comprises an indication of at least one preferred CQI reporting method characteristic, or
      - comprises an indication of at least one preferred CQI reporting method characteristic wherein the preferred CQI reporting method characteristic corresponds to at least one of
         - an indication of at least one subband for which CQI is reported, or
         - an indication of a subband size for which CQI is reported,
   - the transmission error reporting indication at least one of
      - indicates a preferred transmission error reporting method,
      - comprises an indication of a preferred transmission error reporting method characteristic, or
      - comprises an indication of a preferred transmission error reporting method characteristic, wherein the preferred transmission error reporting method characteristic corresponds to at least one of
         - a number of code block groups, CGBs, per transport block, TB, or
         - an enhanced CQI reporting method.
Embodiment 22: The method according to embodiment 20 or 21, further comprising provide at least one of
   - at least one reporting method assessment indication,
   - at least one reporting method assessment indication, wherein the at least one reporting method assessment indication comprises
      - a signal quality difference threshold,
      - a high signal quality difference threshold,
      - a low signal quality difference threshold,
      - re-transmission number threshold,
      - a gain,
      - a number ofCBGs,
      - a maximum number of CBGs, or- a minimum transport block size or
   - a prescribed reporting indication,
   - a prescribed reporting indication, wherein the reporting indication at least one of indicates or controls, configures or indicates to activate at least one of
      - a prescribed CQI reporting method,
      - a prescribed CQI reporting method characteristic,
      - a prescribed transmission error reporting method, or
      - a prescribed transmission error reporting method characteristic.
Embodiment 23: The method according to embodiment 22, wherein at least one of
   - the prescribed CQI reporting method corresponds to the preferred CQI reporting method,
   - the prescribed CQI reporting method characteristic corresponds to the preferred CQI reporting method characteristic,
   - the prescribed transmission error reporting method corresponds to the preferred transmission error reporting method, or
   - the prescribed transmission error reporting method characteristic corresponds to the preferred transmission error reporting method characteristic.
Embodiment 24: The method according to any of embodiment 21 to 24, further comprising at least one of
   - allocate uplink reporting radio resources,
   - allocate uplink reporting radio resources in response to obtaining the at least one reporting method assistance information, or
   - allocate uplink reporting radio resources independently from obtaining reporting method assistance information.
Embodiment 25: A first apparatus, for instance a UE, comprising respective means for performing the method of any of Embodiments 1 to 19.
Embodiment 26: An first apparatus, for instance a UE, comprising at least one processor; and at least one memory storing instructions that, when executed by the at least one processor, cause the apparatus at least to perform and/or control the method according any of embodiments 1 to 19.
Embodiment 27: A second apparatus, for instance a network node, comprising respective means for performing the method of any of embodiments 20 to 24.
Embodiment 28: An second apparatus, for instance a network node, comprising at least one processor; and at least one memory storing instructions that, when executed by the at least one processor, cause the apparatus at least to perform and/or control the method according any of embodiments 20 to 24.
Embodiment 29: A computer program, the computer program when executed by a processor causing an apparatus, e.g. the apparatus according to embodiment 25 or 26, to perform and/or control the actions and/or steps of the method of any of embodiments 1 to 19.
Embodiment 30: A computer program product comprising a computer program according to embodiment 29.
Embodiment 31: A computer program, the computer program when executed by a processor causing an apparatus, e.g. the apparatus according to embodiment 27 or 28, to perform and/or control the actions and/or steps of the method of any of embodiments 20 to 24.
Embodiment 32: A computer program product comprising a computer program according to embodiment 31.
Embodiment 33: A system comprising:
   at least one first apparatus according to any of the embodiments 25 or 26 and
   at least one second apparatus according to any of the embodiments 27 or 28.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Having the same meaning as the expression "A and/or B", the expression "at least one of A or B" may be used herein. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are (e.g., only) examples, and that any feature presented for a particular example embodiment may be used with any aspect on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of (e.g., only) one of the enumerated features is possible. The specific combination of all subsequently enumerated features may as well be considered. Also, a plurality of (e.g., only) one of the enumerated features may be possible.

The sequence of all method actions presented above is not mandatory, also alternative sequences may be possible. Nevertheless, the specific sequence of method actions exemplarily shown in the figures shall be considered as one possible sequence of method actions for the respective embodiment described by the respective figure.

The subject-matter has been described above by means of example embodiments. It should be noted that there are alternative ways and variations which are obvious to a skilled person in the art and can be implemented without deviating from the scope of the appended claims.

### List of abbreviations

- ACK: Positive Acknowledgement
- CBG: Code Block Group
- CRC: Cyclic Redundancy Check
- CQI: Channel Quality Indicator
- HARQ: Hybrid Automatic Repeat39reQuest
- NACK: Negative Acknowledgement
- PDSCH: Physical Downlink Shared Channel
- PHY: Physical
- RRC: Radio Resource Control
- SINR: Signal-to-Interference-Noise Ratio
- TB: Transport Block
- UCI: Uplink Control Information
- UE: User Equipment

## Claims

1. An apparatus comprising at least one processor; and at least one memory storing instructions that, when executed by the at least one processor, cause the apparatus at least to:
- monitor at least one downlink parameter of a downlink reception,
- provide at least one reporting method assistance information to at least one network node based on the at least one downlink parameter, wherein the reporting method assistance information comprises at least one of a channel quality information, CQI, reporting indication or a transmission error reporting indication.

2. The apparatus according to claim 1, the at least one memory storing instructions that, when executed by the at least one processor, cause the apparatus further to
- determine the at least one of the at least one reporting method assistance information based on the at least one downlink parameter.

3. The apparatus according to claim 2, wherein at least one of
- the at least one downlink parameter of a downlink reception comprises a signal quality of a scheduled PDSCH and a signal quality of a carrier and
- determine is based on the signal quality of the scheduled PDSCH and the signal quality of a carrier, wherein the channel quality information, CQI, reporting indication comprised by the determined reporting method assistance information
- indicates a narrowband CQI reporting method if the signal quality of the scheduled PDSCH is larger than the signal quality of the carrier by at least a predetermined signal quality difference threshold and
- indicates a wideband CQI reporting method if the signal quality of the scheduled PDSCH is smaller than or equal to the signal quality of the carrier plus the predetermined signal quality difference threshold
or
- the at least one downlink parameter of a downlink reception at least one of comprises or is used to determine a number of re-transmitted code blocks, CBs, considering a CBG-based transmission error reporting method and a number of re-transmitted CBs considering a TB-based transmission error reporting method and
- determine is based on the number of re-transmitted CBs considering a CBG-based transmission error reporting method and the number of re-transmitted CBs considering a TB-based transmission error reporting method, wherein the transmission error reporting indication comprised by the determined reporting method assistance information
- indicates a CBG-based transmission error reporting method if the number of re-transmitted CBs considering a TB-based transmission error reporting method is higher than the number of re-transmitted CBs considering a CBG-based transmission error reporting method by a predefined re-transmission number threshold and
- indicates a TB-based transmission error reporting method if the number of re-transmitted CBs considering a TB-based transmission error reporting method is lower than or equal to the number of re-transmitted CBs considering a CBG-based transmission error reporting method plus a predefined re-transmission number threshold.

4. The apparatus according to any of claims 1 to 3, wherein at least one of
- the CQI reporting indication at least one of
- indicates a preferred CQI reporting method,
- comprises an indication of at least one preferred CQI reporting method characteristic, or
- comprises an indication of at least one preferred CQI reporting method characteristic wherein the preferred CQI reporting method characteristic corresponds to at least one of
- an indication of at least one subband for which CQI is reported, or
- an indication of a subband size for which CQI is reported,
- the transmission error reporting indication at least one of
- indicates a preferred transmission error reporting method,
- comprises an indication of a preferred transmission error reporting method characteristic, or
- comprises an indication of a preferred transmission error reporting method characteristic, wherein the preferred transmission error reporting method characteristic corresponds to at least one of
- a number of code block groups, CGBs, per transport block, TB, or
- an enhanced CQI reporting method.

5. The apparatus according to any of claims 1 to 4, the at least one memory storing instructions that, when executed by the at least one processor, cause the apparatus further to at least one of
- obtain at least one reporting method assessment indication,
- obtain at least one reporting method assessment indication, wherein the at least one reporting method assessment indication comprises
- a signal quality difference threshold,
- a high signal quality difference threshold,
- a low signal quality difference threshold,
- re-transmission number threshold,
- a gain,
- a number ofCBGs,
- a maximum number of CBGs, or- a minimum transport block size or
- obtain an uplink reporting radio resource indication indicating at least one uplink reporting radio resource, wherein the uplink reporting radio resource is usable by the apparatus to provide the at least one reporting method assistance information.

6. The apparatus according to any of claims 1 to 5, wherein
- the monitored at least one downlink parameter at least comprises a signal quality of the downlink reception.

7. The apparatus according to claim 6, wherein
- the monitored signal quality comprises at least one of
- a signal quality of a scheduled PDSCH,
- a signal quality of a carrier, or
- a signal quality of at least one subband of the carrier.

8. The apparatus according to claim 5 or 7, the at least one memory storing instructions that, when executed by the at least one processor, cause the apparatus further to
- determine the preferred channel quality information, CQI, reporting method and/or the preferred CQI reporting method characteristic based on the monitored signal quality.

9. The apparatus according to claim 8, wherein at least one of
- the at least one preferred CQI reporting method corresponds to at least one of
- a wideband CQI reporting method or
- a narrowband CQI reporting method, or
- the preferred CQI reporting method characteristic corresponds to at least one of
- an indication of at least one subband for which CQI is reported, or
- an indication of a subband size for which CQI is reported.

10. The apparatus according to any of claim 1 to 9, wherein
- the monitored at least one downlink parameter at least comprises at least one transmission error characteristic of the downlink reception.

11. The apparatus according to claim 10, wherein the at least one transmission error characteristic comprises at least one of
- at least one a transmission error of at least one of at least one code block, CB, at least one code block group, CBG, or a transport block, TB, received as part of the downlink reception,
- a number of code blocks received with transmission error,
- a number of code block groups, CBG, respectively comprising at least one CB received with transmission error,
- a number of CBGs comprising at least one CB received with transmission error for a given total number of CBGs within a transport block, TB,
- at least two or more numbers of CBGs comprising at least one CB received with transmission error for a two mutually different total numbers of CBGs within a TB,
- an transmission error probability for at least one of CBs, CBGs or TBs,
- a distribution of CBs received with transmission error within at least one transport block, TB, or
- a re-transmission volume.

12. The apparatus according to claim 10 or 11, the at least one memory storing instructions that, when executed by the at least one processor, cause the apparatus further to
- determine the preferred transmission error reporting method and/or the preferred error reporting method characteristic based on the monitored transmission error characteristic.

13. The apparatus according to claim 12, wherein at least one of
- the preferred transmission error reporting method corresponds to at least one of
- a transport block based, TB-based, Hybrid Automatic Repeat reQuest, HARQ, or
- a code block group based, CBG-based, Hybrid Automatic Repeat reQuest, HARQ,, or
- the preferred transmission error reporting method characteristic corresponds to at least one of
- a number of CGBs per TB or
- an enhanced CQI reporting method.

14. The apparatus according to claim 12 or 13, wherein at least one of
- determine is at least partly based on a reporting method assessment indication, or
- determine comprises at least one of
- determine a number of CB of at least one TB,
- determine an transmission error probability of CBs,
- determine a share of CBs received with transmission error within one or more TBs,
- determine whether a TB size surpasses a predetermined minimum TB size,
- determine a minimum number of required CBGs resulting in at least a predetermined reduction of re-transmissions,
- determining a minimum number of required CBGs resulting in at least a predetermined reduction of re-transmissions compared to a re-transmission of the entire TB,
- determining a minimum number of required CBGs resulting in at least a predetermined reduction of re-transmissions for a given transmission error probability of CBs.

15. The apparatus according to any of claims 1 to 14, wherein the at least one memory storing instructions that, when executed by the at least one processor, cause the apparatus further to
- obtain a prescribed reporting indication, wherein the reporting indication at least one of indicates or controls, configures or indicates to activate at least one of
- a prescribed CQI reporting method,
- a prescribed CQI reporting method characteristic,
- a prescribed transmission error reporting method, or
- a prescribed transmission error reporting method characteristic.
